# EUROPÄISCHE PATENTANMELDUNG

(11) **EP 2 777 962 A1**
(43) Veröffentlichungstag der Anmeldung: **17.09.2014**
(21) Anmeldenummer: 13159627.2
(22) Anmeldetag: 15.03.2013
(51) Int. Cl.: B60G 5/053, B62D 7/14

(54) **Lenkergeführtes Doppelachsaggregat**

(71) Anmelder: Rheinmetall MAN Military Vehicles GmbH, 1230 Wien (AT)
(72) Erfinder: Ribo, Franz, 1220 Wien (AT); Trink, Mario, 2272 Ringelsdorf (AT)
(74) Vertreter: Dietrich, Barbara

(57) **Zusammenfassung**

Die Erfindung betrifft ein an dem Fahrzeugrahmen (1) eines geländegängigen Radfahrzeuges anordbares, lenkergeführtes Doppelachsaggregat (4; 4'), bei dem eine vertikale Abstützung der beiden Achsen (5, 6; 5', 6') des Doppelachsaggregates (4; 4') an dem Fahrzeugrahmen (1) über in Pendelfederlagern (10) aufgehängten gemeinsamen Blattfedern (11) erfolgt, und bei dem mindestens eine der beiden Achsen (5, 6; 5', 6') eine angetriebene Achse ist.

Um zu erreichen, dass bei Verwendung eines derartigen Doppelachsaggregates (4; 4') das entsprechende Radfahrzeug bei Kurvenfahrten einen möglichst geringen Wendekreis aufweist, schlägt die Erfindung vor, dass es sich bei der, in Vorwärtsfahrtrichtung des Radfahrzeuges gesehen, vorderen Achse (5; 5') des Doppelachsaggregates (4; 4') um eine angetriebene Achse und bei der hinteren Achse (6; 6') um eine lenkbare Achse handelt.

## Beschreibung

Die Erfindung betrifft ein an dem Fahrzeugrahmen eines geländegängigen Radfahrzeuges anordbares, lenkergeführtes Doppelachsaggregat, oder auch Doppelachse mit Lenkachse, bei dem eine vertikale Abstützung der beiden Achsen des Doppelachsaggregates an dem Fahrzeugrahmen über in Pendelfederlagern aufgehängten gemeinsamen Blattfedern erfolgt, und bei dem mindestens eine der beiden Achsen eine angetriebene Achse ist.

Ein derartiges Doppelachsaggregat ist beispielsweise aus der DE 10 2005 028 309 A1 bekannt. Bei diesem bekannten Doppelachsaggregat handelt es sich um ein Hinterachsenaggregat, das an zwei Längsträgern des Fahrzeugrahmens angeordnet ist und durch Längslenker sowie Dreieckslenker geführte Achsen aufweist. Dabei erfolgt zum Zweck eines Achslastausgleiches eine vertikale Abstützung der beiden Achsen gegenüber dem Fahrzeugrahmen über in Pendelfederlagern aufgehängten gemeinsamen Blattfedern.

Bei geländegängigen Radfahrzeugen, wie Baustellenfahrzeugen, militärischen Fahrzeugen oder Rettungsfahrzeugen, mit entsprechenden Doppelachsaggregaten besitzen diese üblicherweise mindestens eine von dem Fahrzeugantrieb angetriebene Achse, wobei es sich sowohl bei der angetriebenen Achse als auch bei der nicht angetriebenen Achse in der Regel um nicht gelenkte Starrachsen handelt. Das entsprechende Radfahrzeug besitzt bei einer Kurvenfahrt einen relativ großen Wendekreis.

Der Erfindung liegt die Aufgabe zugrunde, ein der DE 10 2005 028 309 A1 entsprechendes Doppelachsaggregat anzugeben, bei dessen Verwendung, insbesondere als Hinterachsenaggregat, eine gegenüber dem bekannten Doppelachsaggregat wesentliche Reduzierung des Wendekreises des entsprechenden Radfahrzeuges möglich ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, dass es sich mindestens bei der, in Vorwärtsfahrtrichtung des Radfahrzeuges gesehen, vorderen Achse des Doppelachsaggregates um eine angetriebene Achse und bei der hinteren Achse um eine lenkbare Achse handelt. Bei einer vorteilhaften Ausführungsform der Erfindung handelt es sich bei der hinteren Achse ebenfalls um eine angetriebene Achse. Bei der vorderen Achse kann es sich sowohl um eine gelenkte Achse oder um eine starre ungelenkte Achse handeln.

Die Grundidee liegt somit in der Kombination eines blattgefederten Doppelachsaggregates mit achsführenden Komponenten, mit mindestens einer gelenkten Achse zur Reduzierung des Wendekreises unter Nutzung der die Achslast ausgleichenden Wirkungen und deren achsführenden Teile. Dabei sind folgende Kombinationen vorstellbar:
● Achse 1 starr + angetrieben, Achse 2 gelenkt
●Achse 1 starr + angetrieben, Achse 2 gelenkt +angetrieben,
● Achse 1 gelenkt + angetrieben, Achse 2 gelenkt,
● Achse 1 gelenkt + angetrieben, Achse 2 gelenkt + angetrieben.

Eine Variante von gelenkter und angetriebener Achse 1 und starr sowie angetriebenen Achse 2 ist auch möglich, kann aber gegenüber einer Ausstattung mit zwei starren Achsen zur Vergrößerung des Wendekreises führen.

Weitere Einzelheiten und Vorteile der Erfindung ergeben sich aus den folgenden, anhand von Figuren erläuterten Ausführungsbeispielen. Es zeigen:
- Fig. 1: eine Draufsicht auf ein erstes Ausführungsbeispiel eines am Fahrzeugrahmen eines Radfahrzeuges angeordneten, lenkergeführten Doppelachsaggregates, bei dem die hintere Achse lenkbar ausgebildet ist;
- Fig. 2: eine Draufsicht auf ein zweites Ausführungsbeispiel eines Doppelachsaggregates, bei dem beide Achsen lenkbar ausgebildet sind.

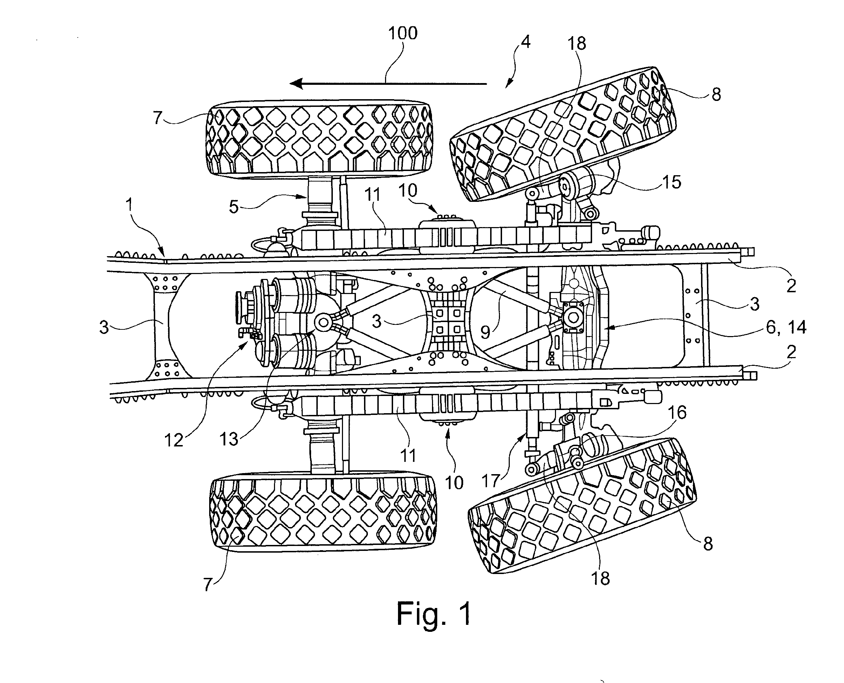

In Fig. 1 ist mit 1 der heckseitige Bereich des Fahrzeugrahmens eines Radfahrzeuges bezeichnet, der zwei Längsträger 2 und mehrere Querträger 3 umfasst.

An dem Fahrzeugrahmen 1 ist ein lenkergeführtes Doppelachsaggregat 4 befestigt. Dieses umfasst zwei starre Achsen 5, 6, an deren Enden jeweils Radträger mit Einzelrädern 7, 8 drehbar gelagert sind.

Zur seitlichen Führung der beiden Achsen 5, 6 sind oberseitig angeordnete Dreieckslenker 9 und zur Führung in Längsrichtung unterseitig angeordnete Längslenker (in Fig. 1 nicht sichtbar) vorgesehen. Außerdem erfolgt eine vertikale Abstützung der beiden Achsen 5, 6 gegenüber dem Fahrzeugrahmen 1 über in Pendelfederlagern 10 aufgehängte gemeinsame Blattfedern 11.

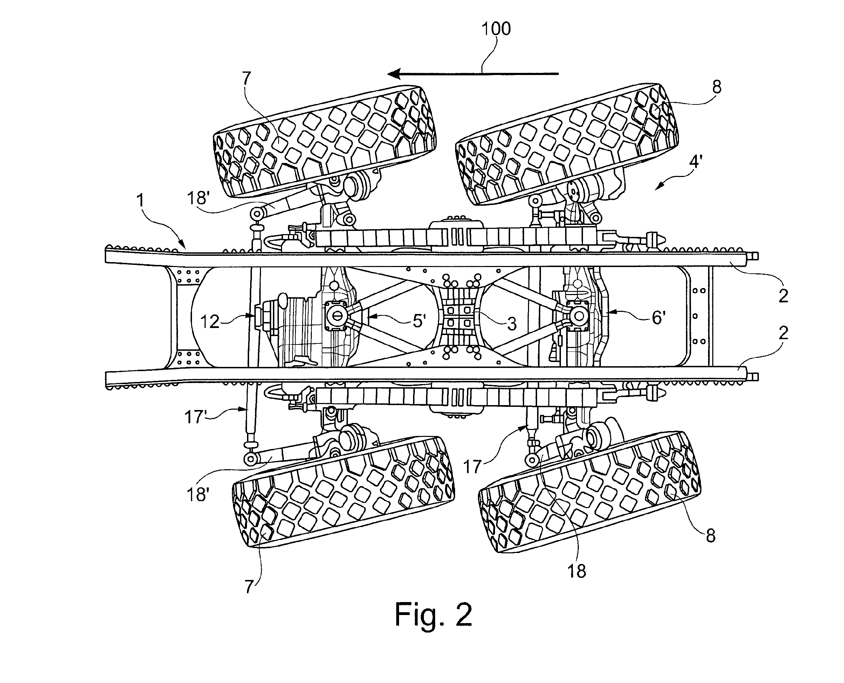

Bei der in Vorwärtsfahrt des entsprechenden Fahrzeuges (in Fig. 1 und 2 mit dem Pfeil 100 angedeutet) angeordneten vorderen Achse 5 handelt es sich um eine starre ungelenkte Achse, an deren Enden sich jeweils die Radträger mit den beiden Einzelrädern 7 befinden. Etwa in der Mitte der Achse 5 ist ein Antrieb 12 vorgesehen, welcher über ein entsprechendes Getriebe 13 auf die vordere Achse 5 wirkt.

Bei der hinteren Achse 6 handelt es sich um eine lenkbare Starrachse, das heißt der an dem Fahrzeugrahmen 1 angeordnete durchgehende Achskörper 14 weist endseitig lenkbare Radträger 15, 16 auf, die gelenkig gehaltert sind (Achsschenkellenkung). Dabei erfolgt die Übertragung der Lenkbewegung auf die Radträger 18, 16 über eine Vielzahl von Übertragungselementen, von denen in Fig. 1 lediglich eine Lenkschubstange 17 und die mit der Lenkschubstange 17 und den Radträgern 15, 16 verbundenen Lenkhebel 18 dargestellt sind.

In Fig. 2 ist die Draufsicht auf ein zweites Ausführungsbeispiel eines Doppelachsaggregates 4' dargestellt, bei dem beide Achsen 5', 6' lenkbar ausgebildet sind. Dabei handelt es sich wiederum um lenkbare Starrachsen, wobei die vordere Achse 5' wiederum durch einen separaten Antrieb 92 antreibbar ist.

Zur Übertragung der Lenkbewegung auf die Einzelräder 7, 8 sind von den erforderlichen Übertragungselementen wiederum lediglich die Lenkschubstangen 17, 17' und die Lenkhebel 18, 18' dargestellt.

Die Erfindung ist selbstverständlich nicht auf die beiden vorstehend beschriebenen Ausführungsbeispiele beschränkt. So kann es sich beispielsweise auch bei der hinteren Achse um eine angetriebene Achse handeln. Außerdem können auf den Radträgern statt Einzelräder auch Zwillingsräder angeordnet sein.

### Bezugszeichenliste

- 1: Fahrzeugrahmen
- 2: Längsträger
- 3: Querträger
- 4, 4': Doppelachsaggregate
- 5, 5': (vordere) Achsen
- 6, 6': (hintere) Achsen
- 7, 8: Einzelräder
- 9: Dreieckslenker
- 10: Pendelfederlager
- 11: Blattfeder
- 12: Antrieb
- 13: Getriebe
- 14: Achskörper
- 15, 16: Radträger
- 17, 17': Lenkschubstangen
- 18, 18': Lenkhebel
- 100: Pfeil

## Patentansprüche

1. An dem Fahrzeugrahmen (1) eines geländegängigen Radfahrzeuges anordbares, lenkergeführtes Doppelachsaggregat (4; 4'), bei dem eine vertikale Abstützung der beiden Achsen (5, 6; 5', 6') des Doppelachsaggregates (4; 4') an dem Fahrzeugrahmen (1) über in Pendelfederlagern (10) aufgehängten gemeinsamen Blattfedern (11) erfolgt, und bei dem mindestens eine der beiden Achsen (5, 6; 5', 6') eine angetriebene Achse ist, **dadurch gekennzeichnet, dass** es sich bei der, in Vorwärtsfahrtrichtung des Radfahrzeuges gesehen, vorderen Achse (5; 5') des Doppelachsaggregates (4; 4') um eine angetriebene Achse und bei der hinteren Achse (6; 6') um eine lenkbare Achse handelt.

2. Doppelachsaggregat nach Anspruch 1, **dadurch gekennzeichnet, dass** es sich bei der hinteren Achse (6; 6') um eine angetriebene Achse handelt.

3. Doppelachsaggregat nach Anspruch 1 oder 2, **dadurch gekennzeichnet, dass** es sich bei der vorderen Achse (5) um eine ungelenkte starre Achse handelt.

4. Doppelachsaggregat nach Anspruch 1 oder 2, **dadurch gekennzeichnet, dass** es sich bei der vorderen Achse (5) um eine gelenkte Achse handelt.

5. Fahrzeug mit einem Doppelachsaggregat (4, 4') nach einem der Ansprüche 1 bis 4.

6. Fahrzeug nach Anspruch 5, **gekennzeichnet durch** auf den Radträgern angeordneten Einzelräder wie auch Zwillingsräder.
